# EUROPEAN PATENT APPLICATION

(11) **EP 2 255 996 A1**
(43) Date of publication of application: **01.12.2010**
(21) Application number: 09164963.2
(22) Date of filing: 08.07.2009
(51) Int. Cl.: B60P 7/08, F16G 11/10

(54) **Rope-buckle**

(30) Priority: 27.05.2009 TW 98209459 U
(71) Applicant: Ting, San-Lang, Changhua County (TW); Chang, Chun-Hui, Taiwan 51645 (CN); Ting, Wei-Lun, Taiwan 51645 (CN); Ting, Wei-Yuan, Taiwan 51645 (CN)
(72) Inventor: Ting, San-Lang, Changhua County (TW)
(74) Representative: Lang, Christian

(57) **Abstract**

A rope buckle includes a first clamping plate and a second clamping plate, substantially parallel to each other, a through hole and a pivot seat disposed on both ends of the first clamping plate respectively, a position limit module disposed adjacent to the through hole, a positioning rod pivotally installed to an end of the second clamping plate and passed through the through hole of the first clamping plate, and whose end being secured by a fixing nut, and a press module having a press rod provided for passing a first pivot to pivotally install a pivot seat of the first clamping plate, and an end of the press rod is extended to a position positioned by the position limit module, and another end of the press rod is pulled at the second clamping plate for clamping and fixing the second clamping plate and the first clamping plate.

## Description

### BACKGROUND OF THE INVENTION

### (a) Field of the Invention

The present invention relates to a technical area of tying objects, in particular to a rope buckle featuring convenient use and low cost.

### (b) Description of the Prior Art

In a conventional way of tying goods such as tying large-sized cargoes onto a container and a truck, the goods are fixed by tying a plurality of ropes on the surface of the goods to prevent the goods from falling down and improve the safety of goods transportation, and a hand puller is generally installed to each rope and provided for binding both ends of the rope to achieve the fixing effect. However, each rope requires a hand puller for the fixing, and the hand pullers incur a high cost and have a disadvantage of being loosened by mistake easily. Obviously, the conventional way of tying goods has cost and safety issues.

### SUMMARY OF THE INVENTION

It is a primary objective of the present invention to overcome the high cost and the low safety issues of the conventional way of tying goods by redesigning a rope buckle, such that after the hand puller binds the rope, and the rope buckle clamps and fixes the rope, the hand puller can be removed to achieve the effects of binding a plurality of ropes by a single hand puller, providing a convenient use, lowering the cost of tying objects, and improving the safety of its use.

To achieve the foregoing objective, the present invention provides a rope buckle, comprising: a first clamping plate, a through hole and a pivot seat disposed at both ends of the first clamping plate, a position limit module installed adjacent to the through hole, a second clamping plate installed parallel to the first clamping plate, a positioning rod pivotally installed to an end of the second clamping plate and passed through the through hole of the first clamping plate, and a fixing nut for securing an end of the positioning rod. The rope buckle further comprises a press module having a press rod provided for passing a first pivot to pivotally install a pivot seat of the first clamping plate, and an end of the press rod is extended to a position positioned by the position limit module, and another end of the press rod is pulled at the second clamping plate for clamping and fixing the second clamping plate and the first clamping plate.

### BRIEF DESCRIPTION OF THE DRAWINGS

FIG. 1 is a perspective view of a preferred embodiment of the present invention;
FIG. 2 is an exploded view showing the components in FIG. 1;
FIG. 3 is a schematic view of clamping a first clamping plate and a second clamping plate of FIG. 1;
FIG. 4 is a schematic view showing the status of finishing the clamping of the first clamping plate and the second clamping plate of FIG. 3;
FIG. 5 is a perspective view of a press module in accordance with another preferred embodiment of the present invention;
FIG. 6 is a perspective view of a press module in accordance with another preferred embodiment of the present invention;
FIG. 7 is a perspective view of a press module in accordance with another preferred embodiment of the present invention;
FIG. 8 is a perspective view of a press module in accordance with another preferred embodiment of the present invention;
FIG. 9 is a perspective view of the present invention combined with a hooking element;
FIG. 10 is a perspective view of a hooking element in accordance with another preferred embodiment of the present invention;
FIG. 11 is a partial schematic view of the present invention applied to a truck;
FIG. 12 is a cross-sectional side view of a first clamping plate and a second clamping plate before being clamped together in accordance with the present invention;
FIG. 13 is a cross-sectional side view of a first clamping plate and a second clamping plate clamped together in accordance with the present invention;
FIG. 14 is a perspective view of combining a positioning module in accordance with a preferred embodiment of the present invention;
FIG. 15 is a partial cross-sectional view of the present invention depicted in FIG. 14 and installed to a truck.
FIG. 16 is a partial cross-sectional view of a positioning module installed to a truck in accordance with the present invention;
FIG. 17 is a perspective view of a hooking element combined with a positioning module in accordance with another preferred embodiment of the present invention;
FIG. 18 is a perspective view of another preferred embodiment of the present invention;
FIG. 19 is a cross-sectional side view of a first clamping plate and a second clamping plate as depicted in FIG. 18 before they are clamped together in accordance with the present invention; and

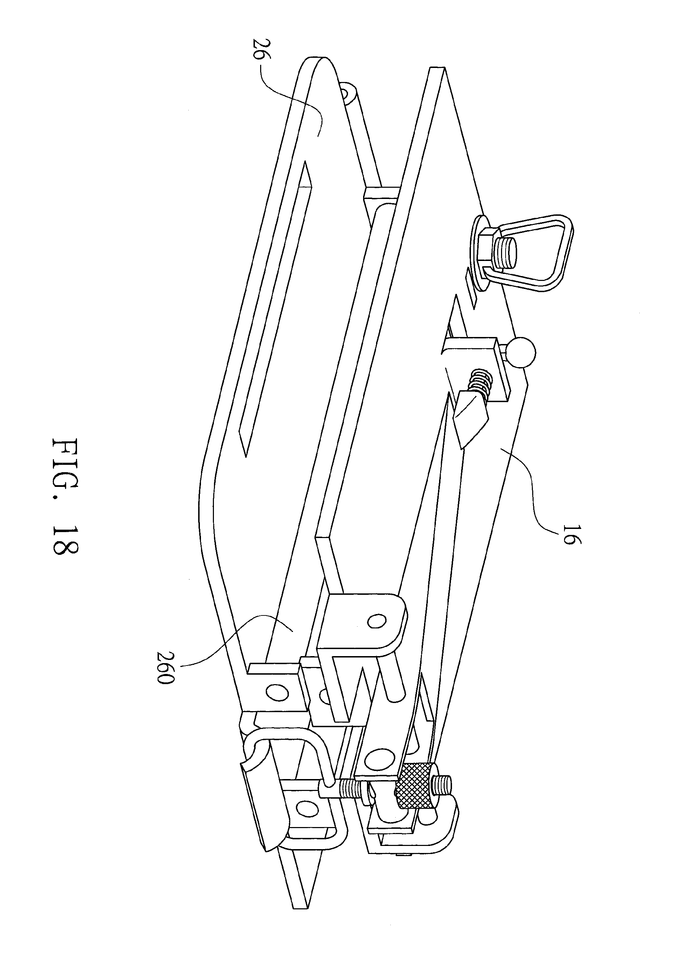

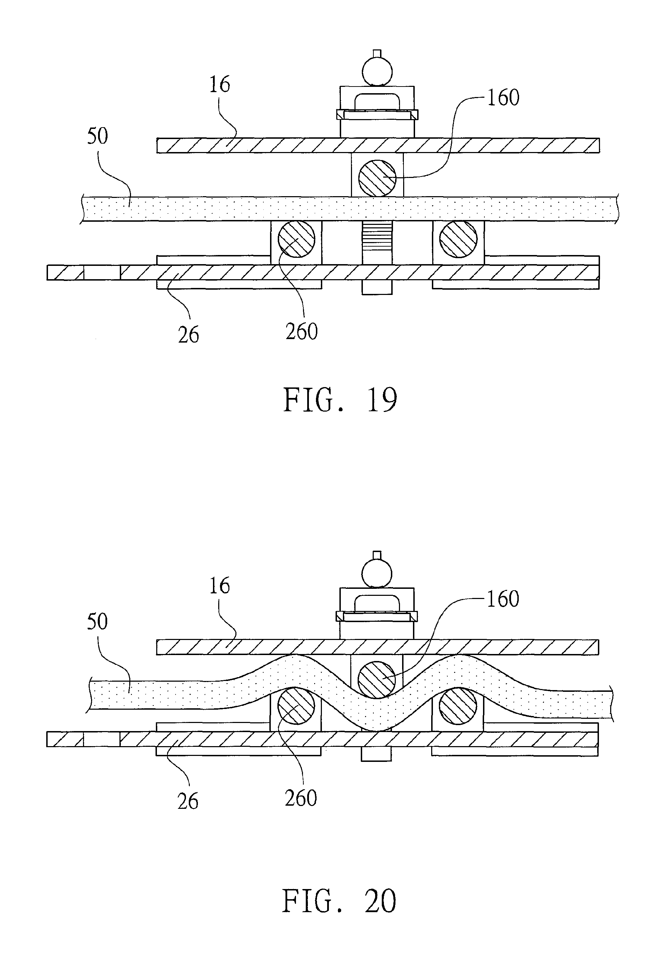

FIG. 19 is a cross-sectional side view of a first clamping plate and a second clamping plate as depicted in FIG. 18 after they are clamped together in accordance with the present invention.

### DETAILED DESCRIPTION OF THE PREFERRED

### EMBODIMENTS

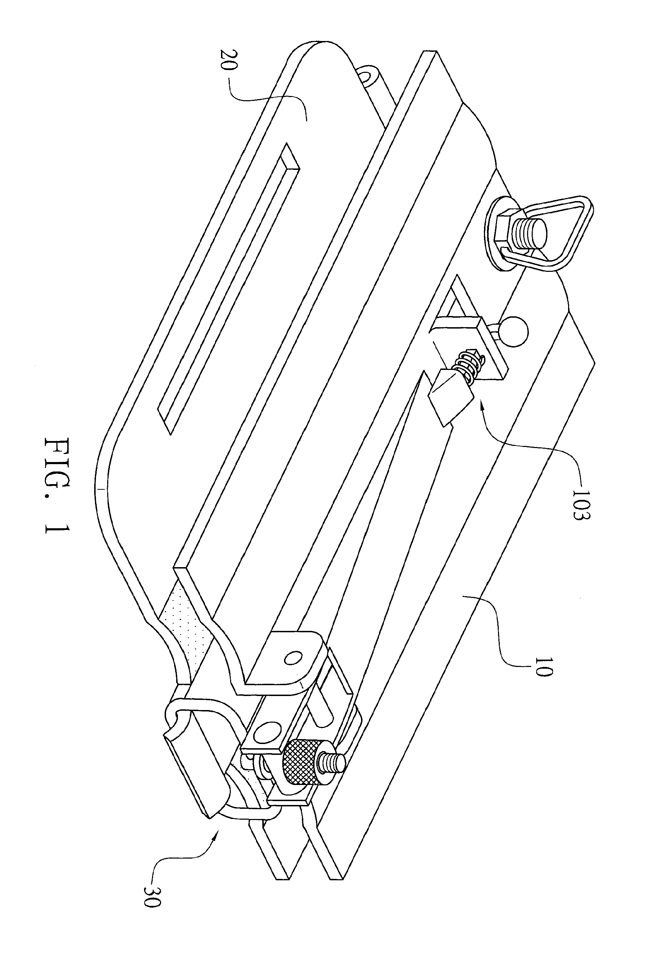

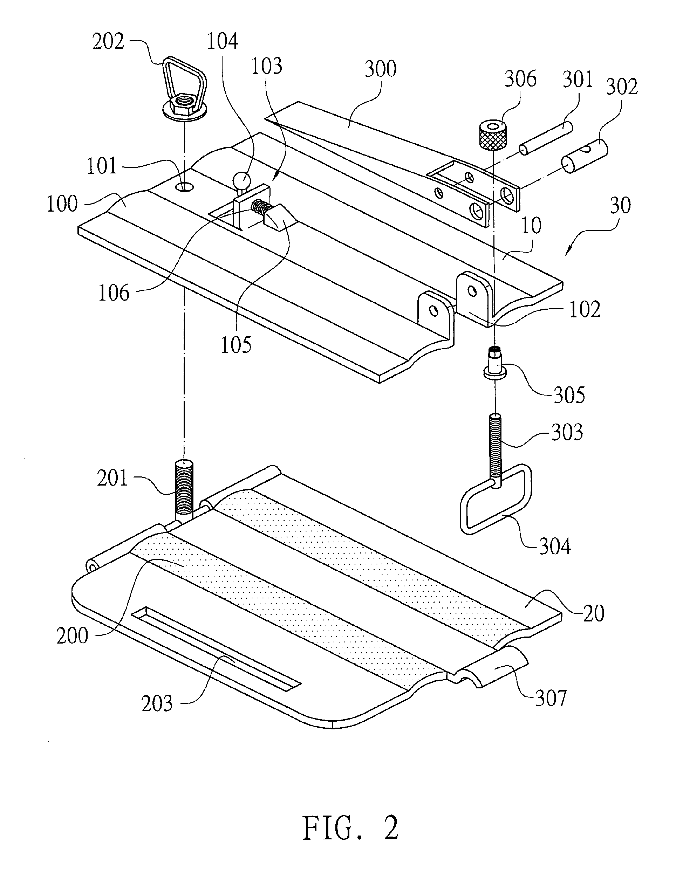

With reference to FIGS. 1 and 2 for a rope buckle of the present invention, the buckle comprises:
a first clamping plate 10, having at least one first embossed portion 100 disposed on a surface of the first clamping plate 10, a first embossed portion 100 disposed on both sides of the first clamping plate 10 separately, a through hole 101 and a pivot seat 102 disposed at both ends of the first clamping plate 10 respectively, a position limit module 103 disposed adjacent to the through hole 101, and the position limit module 103 having an L-shaped rotating rod 104 pivotally installed thereon, and the rotating rod 104 including a spring 106 sheathed in a direction towards the pivot seat 102, and a stop block 105 disposed at an end of the rotating rod 104 and substantially in a triangular shape, and a plane of the stop block 105 being parallel to the first clamping plate 10;
a second clamping plate 20, installed parallel to the first clamping plate 10, and having at least one second embossed portion 200 corresponding to the first embossed portion 100 of the first clamping plate 10, at least one anti-skid structure installed onto a surface of the second embossed portion 200, and having a structure of an anti-skid pad with protruded dots and a tooth profile, and a positioning rod 201 being pivotally installed to an end of the second clamping plate 20, and passed through the through hole 101 of the first clamping plate 10, and an end of the positioning rod 201 being secured by a fixing nut 202, and a long hole 203 being formed on a side of the second clamping plate 20;
a press module 30, including a press rod 300 for passing through a first pivot 301 to be pivotally installed to the pivot seat 102 of the first clamping plate 10, and an end of the press rod 300 being extended to a position of the bottom of the stop block 105 of the position limit module 103, and another end of the press rod 300 having a second pivot 302 pivotally installed thereon, and a stud bolt 303 being passed through the second pivot 302 in a longitudinal direction, and an end of the stud bolt 303 having a pull handle 304 fixed thereon, and another end of the stud bolt 303 having a bushing 305 screwed thereon and passed through the second pivot 302, and an end of the bushing 305 being riveted by a retaining block 306, and the press module 30 having a combining portion 307 in an substantially inverted hook shape and disposed on the second clamping plate 20 for hooking the pull handle 304 to the combining portion 307, and the second clamping plate 20 and the combining portion 307 being formed integrally, so as to complete the rope buckle of the present invention.

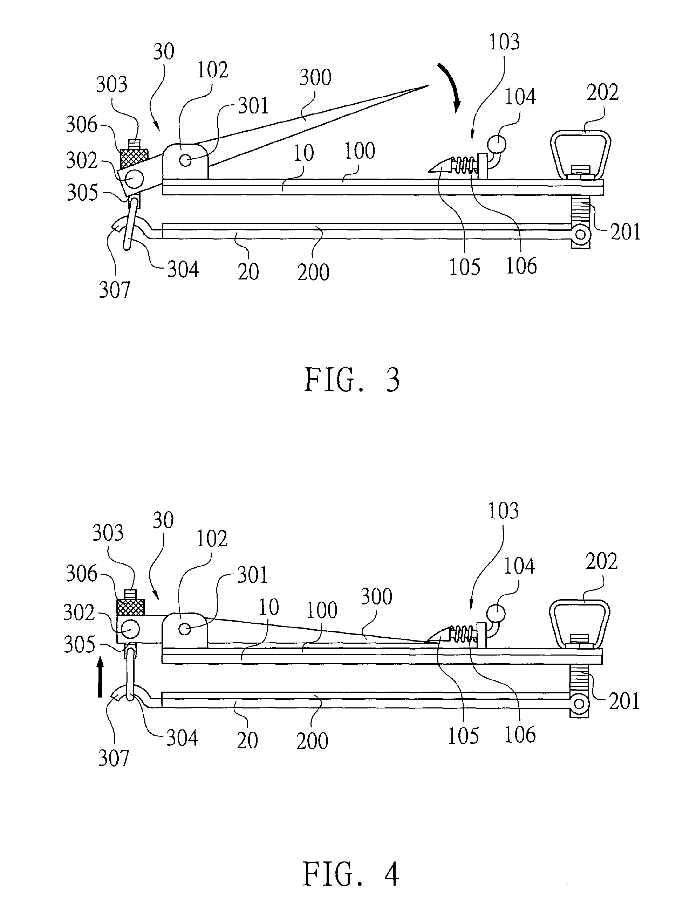

With reference to FIGS. 3 and 4 for schematic views of operating the press module in accordance with the present invention, firstly, the pull handle 304 of the press module 30 is hooked at the combining portion 307 of the second clamping plate 20, such that the press rod 300 can be turned downwardly from the top of the position limit module 103, and the first pivot 301 is provided for making the press rod 300 into a seesaw-like form, and lifting the pull handle 304 together with the second clamping plate 20, and then the press rod 300 is abutted at the bottom of the stop block 105, such that a triangular shape formed by the stop block 105 can stop the press rod 300 from being lifted and provide a positioning effect.

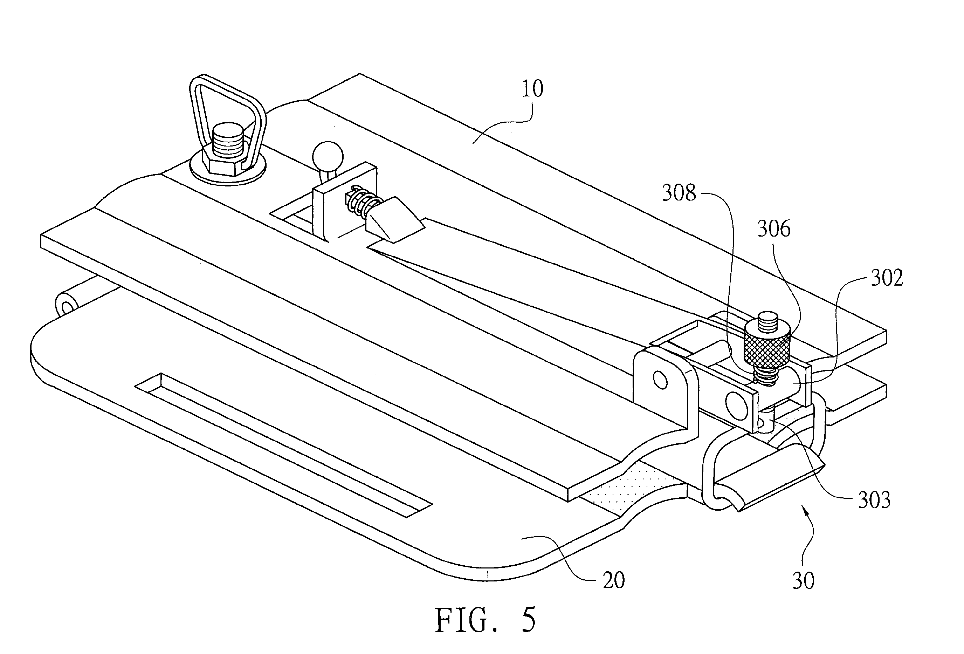

With reference to FIG. 5 for a perspective view of a press module in accordance with another preferred embodiment of the present invention, the structure of the rope buckle is substantially the same as the rope buckle as depicted in FIG. 1, wherein the stud bolt 303 of the press module 30 includes an elastic member 308 sheathed between the second pivot 302 and the retaining block 306, and the elastic member 308 can be a spring as shown in FIG. 5 for improving the shock absorbing effect of the press module 30, and appropriately adjusting the clamping force of the first clamping plate 10 and the second clamping plate 20 according to the elasticity coefficient of the elastic member 308.

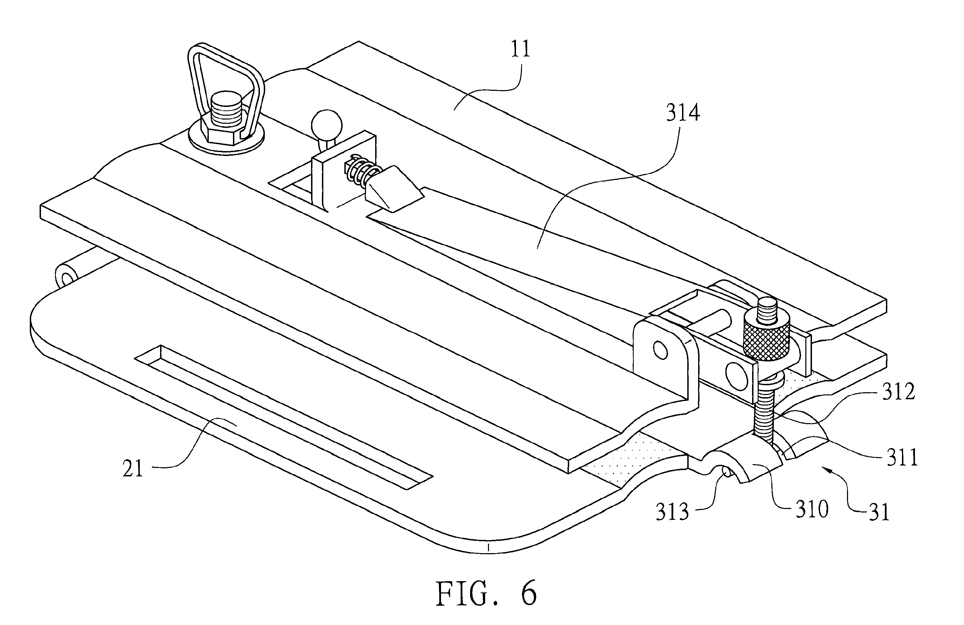

With reference to FIG. 6 for a perspective view of a press module in accordance with a preferred embodiment of the present invention, the structure of the rope buckle is substantially the same as the rope buckle as depicted in FIG. 1, wherein the combining portion 310 of the press module 31 includes a groove 311 cut in a longitudinal direction, and a transversal rod 313 is formed at the bottom of the press module 31 of the stud bolt 312 and stopped by an internal side of the combining portion 310, such that the transversal rod 313 can also be linked by turning the press rod 314 to drive the combining portion 310 to approach the first clamping plate 11 in order to achieve the effect of clamping the first clamping plate 11 and the second clamping plate 21.

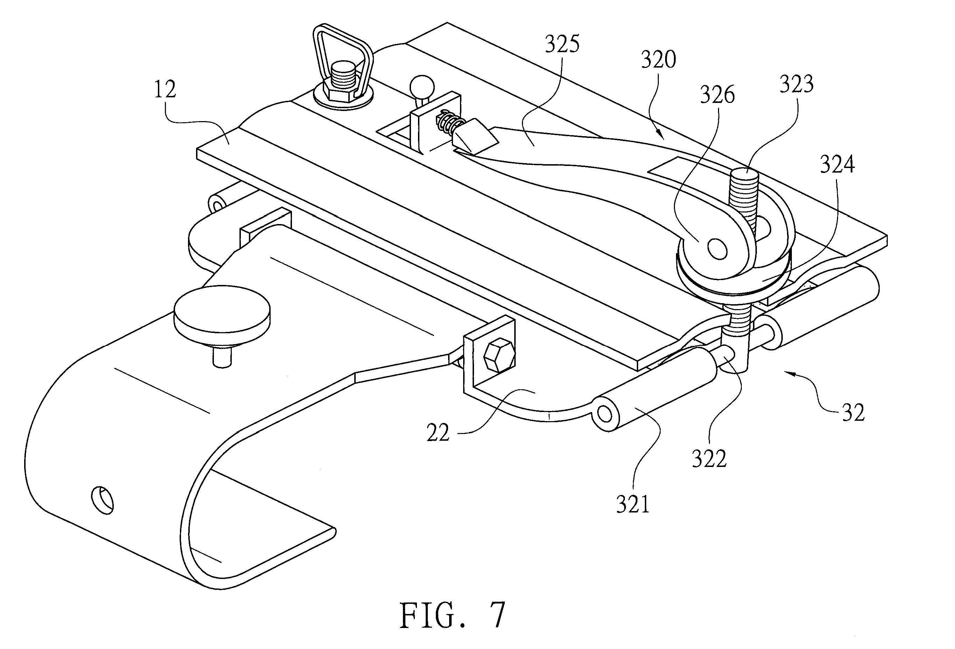

With reference to FIG. 7 for a perspective view of a press module in accordance with a preferred embodiment of the present invention, the structure of the rope buckle is substantially the same as the rope buckle as depicted in FIG. 1, wherein the press module 32 includes a quick release member 320, and the combining portion 321 forms a shaft lever 322 pivotally installed at the second clamping plate 22, and the shaft lever 322 has a stud bolt 323 fixed thereon and provided for the stud bolt 323 to sheath a stop plate 324 onto a surface of the first clamping plate 12, and the stud bolt 323 includes a press rod 325 pivotally installed to the top of the stop plate 324, and the press rod 325 has two pieces of cams 326 formed at positions opposite to the stud bolt 323, such that the press rod 325 can be pressed down to abut the long axle of the two cams 326 at the stop plate 324 to press the first clamping plate 12 towards the second clamping plate 22, so as to achieve the effect of fixing the rope buckle.

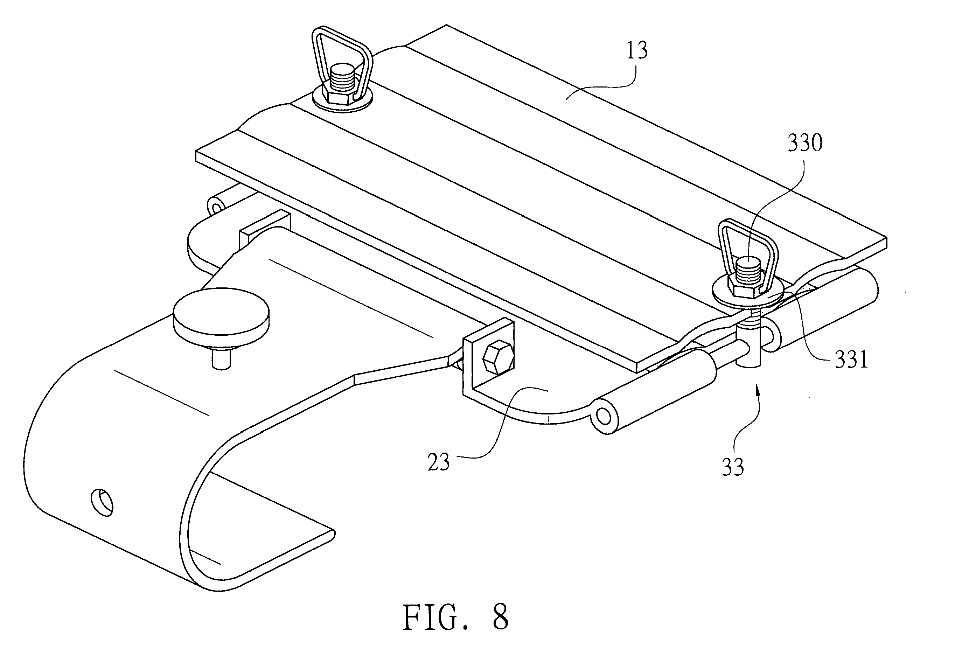

With reference to FIG. 8 for a perspective view of a press module in accordance with a preferred embodiment of the present invention, the structure of the rope buckle is substantially the same as the rope buckle as depicted in FIG. 7, wherein the stud bolt 330 of the press module 33 includes another fixing nut 331 installed at a surface of the first clamping plate 13. The first clamping plate 13 and the second clamping plate 23 can also be clamped and fixed by using the fixing nut 331.

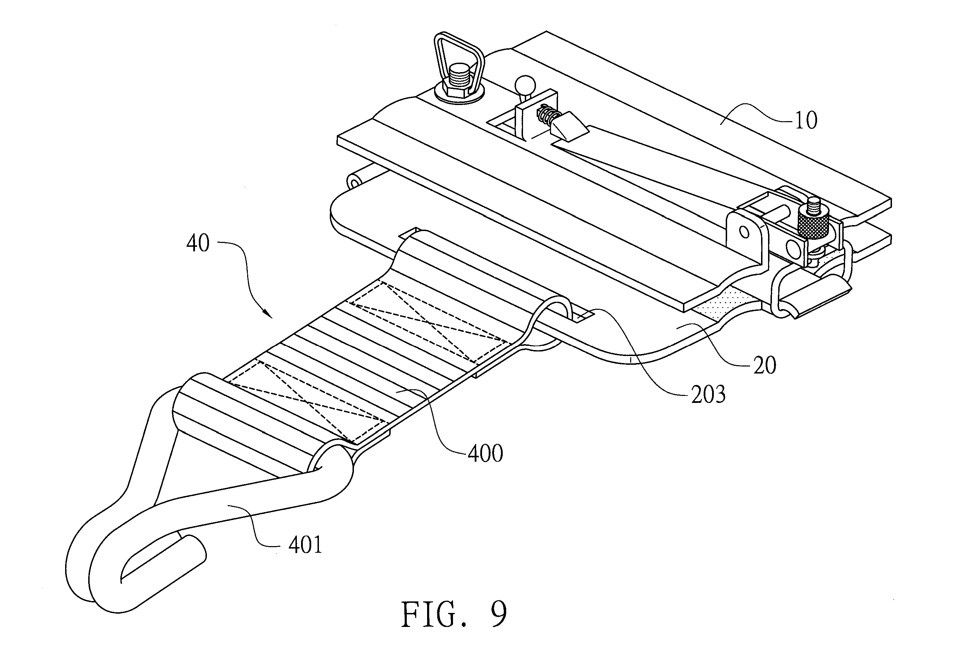

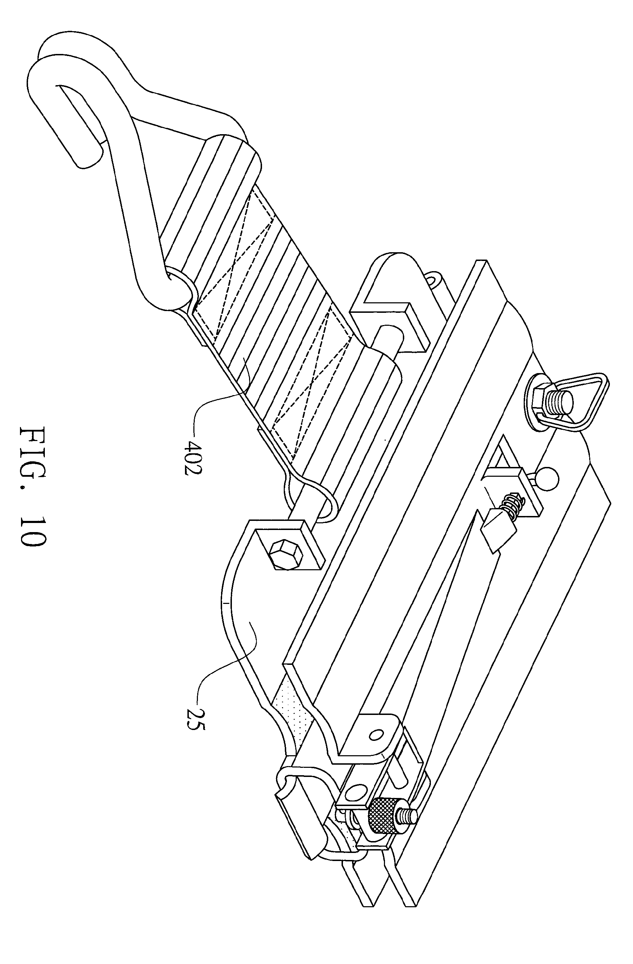

With reference to FIG. 9 for a perspective view of the present invention combined with a hooking element, the long hole 203 of the second clamping plate 20 is installed with a hooking element 40 which is a rope belt 400, and the rope belt 400 includes a hook 401 at an end without the second clamping plate 20. As shown in FIG. 10, the rope belt 402 can be pivotally installed to the second clamping plate 25, without requiring a long hole 203 formed on the second clamping plate 20 as shown in FIG. 9 to achieve the same effect of installing the rope belt.

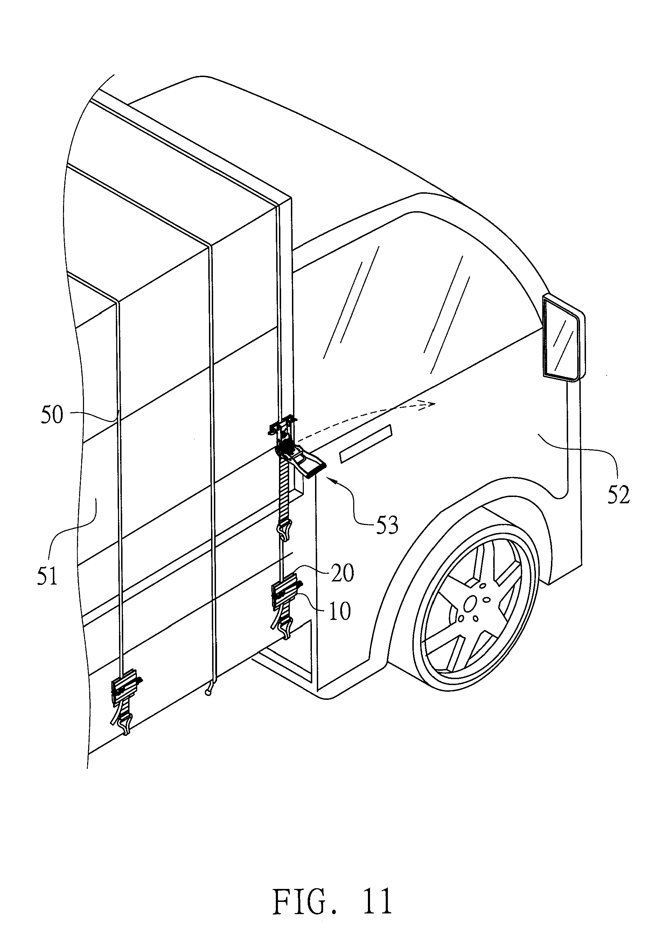

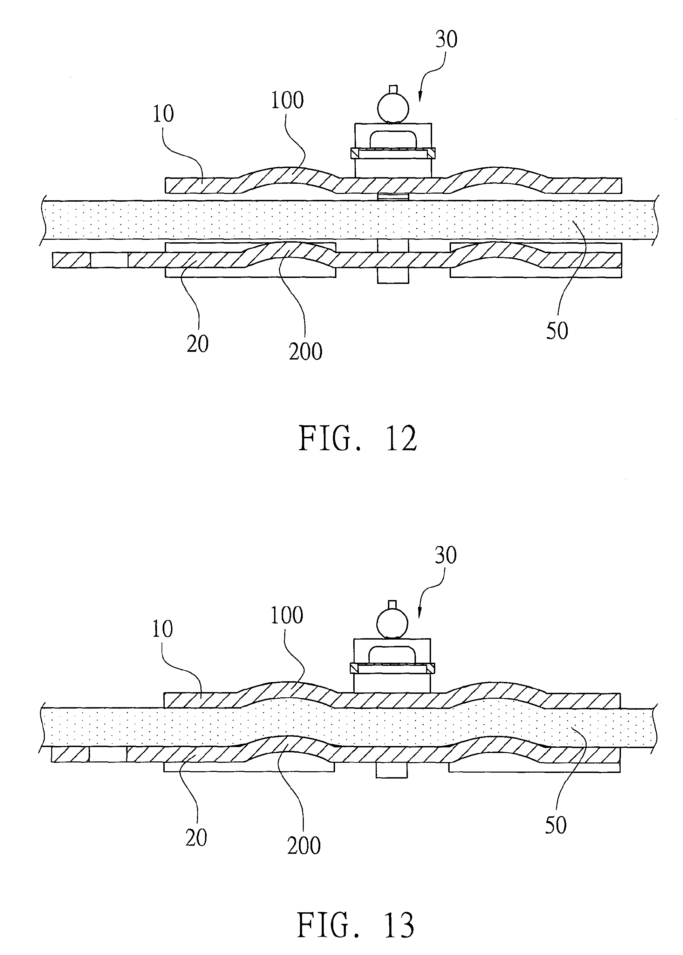

With reference to FIG. 11, when the rope buckle is used for transporting goods by a truck, a rope 50 is used for tying and fixing the good 51 onto the truck 52, and the method of the present invention allows a user to fix and pull a rope 50 tightly by a hand puller 53, pass the rope 50 through the first clamping plate 10 and the second clamping plate 20, hook a hook 401 as shown in FIG. 9 to the bottom of the truck 52, and operate the press module 30 as described above to clamp the first clamping plate 10 and the second clamping plate 20 as shown in FIGS. 12 and 13. By clamping the first embossed portion 100 with an anti-skid structure of the two second embossed portion 200, the user can fix the rope 50 effectively, and use the rope buckle to fix the rope 50 to the truck. After the rope 50 is fixed, the user can remove the hand puller 53 to reduce the cost of using several hand pullers 53 to tie several ropes 50. Of course, this embodiment only shows one of the applications of the present invention, and the rope buckle of the present invention can be applied in other occasions that require positioning the rope 50 such as tying the goods

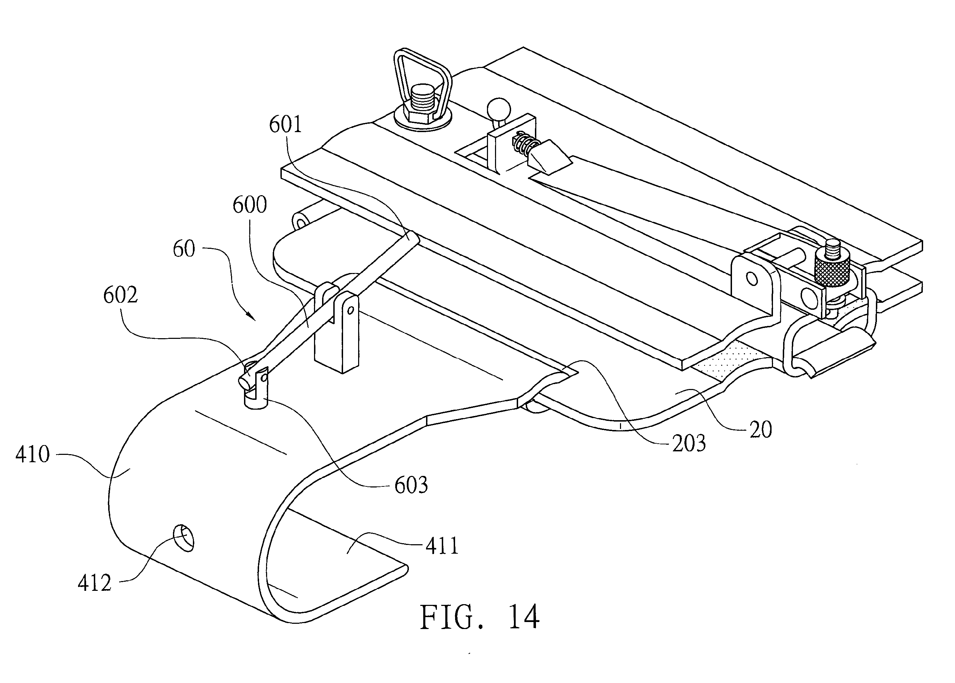

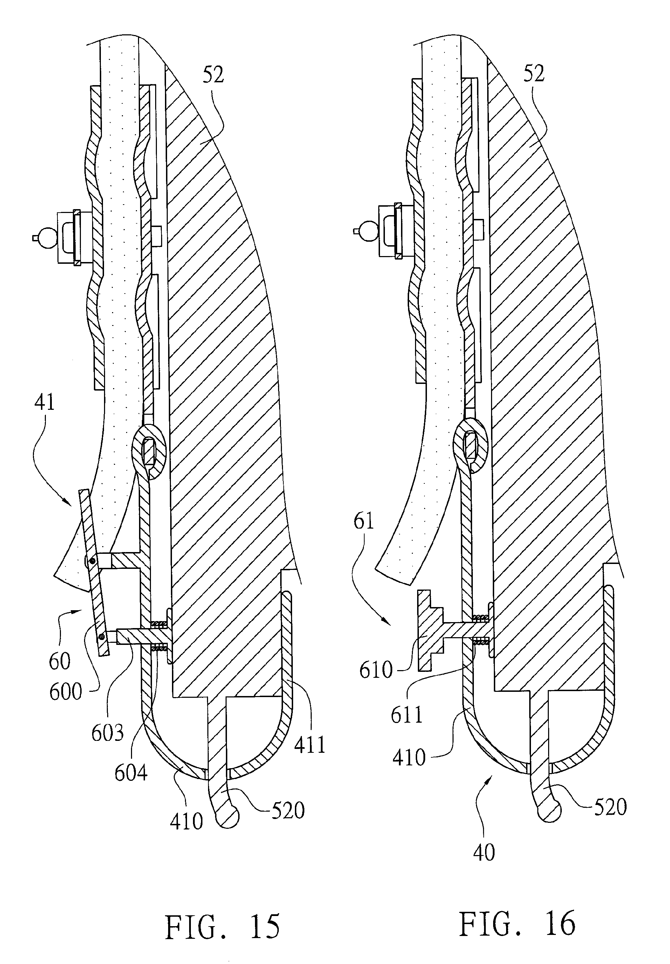

With reference to FIGS. 14 and 15 for a hooking element of a preferred embodiment of the present invention, the hooking element 41 is a plate 410, and an end of the plate 410 is bent and passed through the long hole 203 of the second clamping plate 20, and a hook portion 411 is formed at another end, and the middle section of the hook portion 411 includes a hole 412, and the plate 410 includes a positioning module 60, and the positioning module 60 includes a pull rod 600 pivotally installed to the plate 410, and both ends of the pull rod 600 form a free end 601 and a pivotal end 602 respectively, and a T-shaped link shaft 603 is pivotally installed to the pivotal end 602, and a spring 604 is sheathed to a large-diameter end of the link shaft 603 and the plate 410 and provided for abutting the large-diameter end of the link shaft 603 at a lateral side of the truck 52 to clamp the large-diameter end and the end of the hook portion 411 to the bottom of the truck 52 effectively, and the hole 412 at the middle section of the hook portion 411 is provided for passing a bottom latch at the bottom of the truck 52 to achieve a multi-locking safety effect. If it is necessary to loosen the rope buckle from the truck 52, a user can press the pull rod 600 by one hand to pull and separate the hook portion 411 from the bottom of the truck 52, so as to achieve the effect of a convenient use.

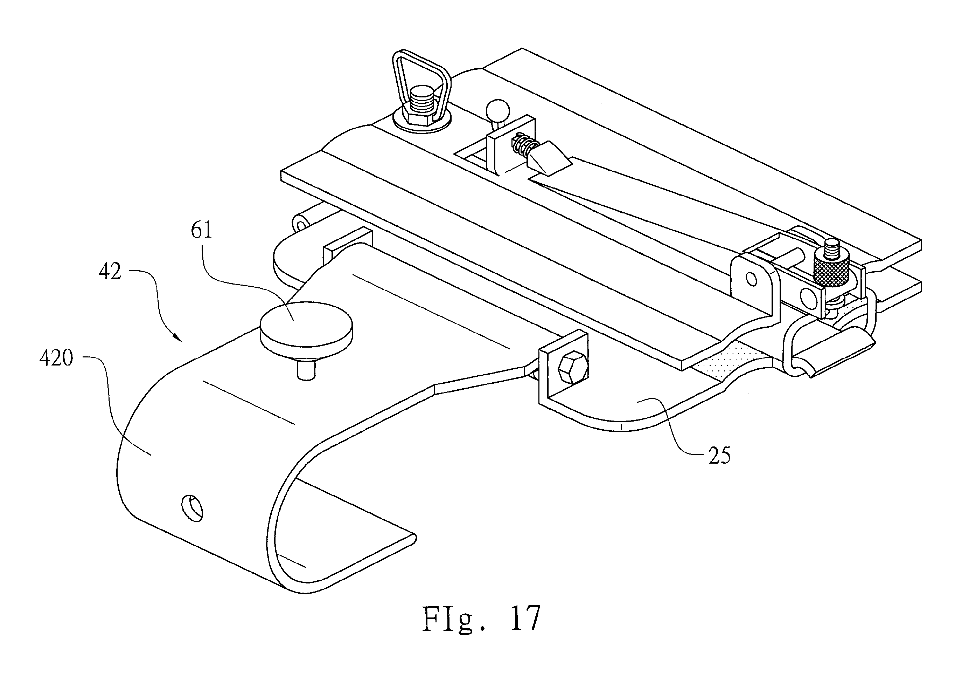

With reference to FIG. 16 for a positioning module in accordance with a preferred embodiment of the present invention, the structure of the hooking element is substantially the same as the hooking element 41 of FIG. 15, wherein the positioning module 61 includes a pull button 610 having a substantially I-shaped cross-section, and a middle section of the pull button 610 is pivotally passed through the plate 410, and a spring 611 is sheathed between the plate 410 and the pull button 610 and provided for an end of the pull button 610 to abut a lateral side of the truck 52 to achieve the same effect of the hooking element 41 as depicted in FIG. 15. With reference to FIG. 17, a plate 420 of the hooking element 42 can be pivotally installed at the second clamping plate 25 without requiring the long hole 203 as depicted in FIG. 14.

With reference to FIG. 18, the embossed portion of the present invention as shown in FIG. 2 can be omitted, and at least one metal rod 160, 260 is pivotally installed at the first clamping plate 16 and the second clamping plate 26, wherein the metal rods 160, 260 can be metal rods made of iron or steel, and the first clamping plate 16 as shown in the figure includes a metal rod 160, and the second clamping plate 26 includes two metal rods 260, and the three metal rods 160, 260 are installed and arranged in a substantially triangular shape. In FIGS. 19 and 20, if a user operates the press module as shown in FIGS. 3 and 4, the user can clamp the first clamping plate 16 and the second clamping plate 26 to fix a rope 50 between the metal rods 160, 260, so as to achieve a tight clamping effect.

The present invention improves over the prior art and complies with the patent application requirements, and thus is duly filed for patent applications. While the invention has been described by means of specific embodiments, numerous modifications and variations could be made thereto by those skilled in the art without departing from the scope and spirit of the invention set forth in the claims.

## Claims

1. A rope buckle, comprising:
a first clamping plate, having a through hole disposed at an end of the first clamping plate;
a second clamping plate, installed parallel to the first clamping plate, and having a positioning rod pivotally installed at an end of the second clamping plate, and the positioning rod passing through the through hole of the first clamping plate, and an end of the positioning rod being secured by a fixing nut;
a press module, having a combining portion disposed at the second clamping plate, and an end of the press module abutting the first clamping plate, and another end of the press module pulling the combining portion to clamp and fix the second clamping plate and the first clamping plate.

2. The rope buckle of claim 1, wherein the first clamping plate includes a position limit module disposed at a position adjacent to the through hole, and the position limit module includes an L-shaped rotating rod pivotally installed to the first clamping plate, and the rotating rod includes a spring sheathed in a direction towards the pivot seat, and a stop block fixed at an end of the rotating rod, and the stop block is substantially in a triangular shape, and a plane of the stop block is parallel to the first clamping plate.

3. The rope buckle of claim 2, wherein the first clamping plate includes a pivot seat at an end without the through hole, and the press module includes a press rod for passing a first pivot to pivotally installing a pivot seat of the first clamping plate, and an end of the press rod is extended to a position positioned and abutted by the stop block of the position limit module, and another end of the press rod is pulled at the second clamping plate for clamping and fixing the second clamping plate and the first clamping plate.

4. The rope buckle of claim 1, wherein the first clamping plate includes a first embossed portion disposed on a surface of the first clamping plate, and the second clamping plate includes a second embossed portion disposed opposite to both sides of the first embossed portion separately, and an anti-skid structure is disposed on surfaces of the first embossed portion and the second embossed portion separately.

5. The rope buckle of claim 2, wherein the press rod includes a second pivot pivotally coupled to an end without the position limit module, and a stud bolt is passed through the second pivot longitudinally, and a pull handle is fixed to an end of the stud bolt, and a bushing is screwed to another end of the stud bolt, and the bushing is passed through the second pivot, and a retaining block is riveted at an end of the bushing, and the press module includes a combining portion in a substantially inverted hook shape and disposed at the second clamping plate for hooking the pull handle to the combining portion.

6. The rope buckle of claim 5, wherein the stud bolt of the press module includes an elastic member sheathed between the second pivot and the retaining block.

7. The rope buckle of claim 3, wherein the press rod includes a second pivot pivotally coupled to an end without the position limit module, and a screw rod is passed through the second pivot longitudinally, and a transversal rod is formed below the stud bolt of the press module, and the combining portion of the press module includes a groove cut in a longitudinal direction, and the transversal rod is stopped by an internal side of the combining portion.

8. The rope buckle of claim 3, wherein the press module includes a quick release member, and the combining portion forms a shaft lever pivotally coupled to the second clamping plate, and the shaft lever includes a stud bolt for sheathing a stop plate to a surface of the first clamping plate, and the stud bolt includes a press rod pivotally coupled to the top of the stop plate, and the press rod forms a structure of two pieces of cams at positions opposite to the stud bolt, and a long axle of the two cams is abutted at the stop plate to press and fix the first clamping plate in a direction towards the second clamping plate.

9. The rope buckle of claim 1, wherein the combining portion of the press module is pivotally installed at the second clamping plate to form a shaft lever, and the shaft lever includes a stud bolt fixed thereon, and the stud bolt includes another fixing nut disposed on a surface of the first clamping plate and secured by the fixing nut, and abutted at the first clamping plate for clamping and fixing the first clamping plate and the second clamping plate.

10. The rope buckle of claim 1, wherein the second clamping plate includes a hooking element pivotally coupled to a side of the second clamping plate.

11. The rope buckle of claim 10, wherein the hooking element is a rope belt, and the rope belt includes a hook disposed at an end without the second clamping plate.

12. The rope buckle of claim 10, wherein the hooking element is a plate, and the plate includes a hook portion formed at an end without the second clamping plate, and a hole is disposed at a middle section of the hook portion, and the plate includes a positioning module.

13. The rope buckle of claim 12, wherein the positioning module includes a pull rod pivotally installed to the plate, and both ends of the pull rod are a free end and a pivotal end respectively, and the pivotal end includes a T-shaped link shaft pivotally installed thereon, and a spring is sheathed between a large-diameter end of the link shaft and the plate.

14. The rope buckle of claim 12, wherein the positioning module includes a pull button having a substantially I-shaped cross-section, and a middle section of the pull button is pivotally passed through the plate, and a spring is sheathed between the plate and the pull button.

15. The rope buckle of claim 1, wherein the first clamping plate includes at least one metal rod, and the second clamping plate includes at least two metal rods, such that the metal rods are installed and arranged in a triangular shape.
